(19) Europäisches Patentamt

European Patent Office

Office européen des brevets

(11) **EP 1 037 206 A2**

(12) **EUROPEAN PATENT APPLICATION**

(43) Date of publication:
**20.09.2000 Bulletin 2000/38**

(51) Int. Cl.7: **G11B 7/135**

(21) Application number: **00301718.3**

(22) Date of filing: **02.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.03.1999 JP 5961499**

(71) Applicant: **Pioneer Corporation
Meguro-ku, Tokyo (JP)**

(72) Inventors:
• **Sagiura, Satoshi
  Tsurugashima-shi, Saitama (JP)**
• **Tachibana, Akihiro
  Tsurugashima-shi, Saitama (JP)**
• **Kubota, Yoshihisa
  Tsurugashima-shi, Saitama (JP)**

(74) Representative: **Haley, Stephen
  Gill Jennings & Every,
  Broadgate House,
  7 Eldon Street
  London EC2M 7LH (GB)**

(54) **Optical pickup**

(57)    Adjustment unit such as astigmatism giving unit or aberration removal unit is used to adjust aberration so as to remove coma aberration contained in return light from an integral-type prism or give new astigmatism to the return light, and the resultant light is guided to a light reception element.

EP 1 037 206 A2

Printed by Xerox (UK) Business Services
2.16.7 (HRS)/3.6

**Description**

This invention relates to an optical pickup for reading (or writing) various optical information record media.

Hitherto, various optical discs called LD (laser disc), CD (compact disc), and DVD (digital versatile disc) have been known as optical information record media. The specifications of the optical discs, such as the substrate thickness, are standardized according to the optical disc type. An optical disc of a multilayer construction contained in the DVD specifications has a different effective optical disc thickness for each record layer. The optimum numerical aperture (NA) of a read object lens also varies from one type of optical disc to another.

Of course, a compatible player capable of reading record information from both a CD and a DVD is demanded; however, there are the following differences between an optical unit for reading a CD and that for reading a DVD:

Difference in numerical aperture (NA): The numerical aperture (NA) of the DVD is 0.6 and that of the CD is 0.45.

Difference in substrate thickness from optical disc surface to record (reflection) side: The substrate thickness of the DVD is 0.6 mm and that of the CD is 1.2 mm.

Difference in wavelength of optical read light: The wavelength of the DVD is 650 nm and that of the CD is 780 nm.

Therefore, to realize an optical pickup of a CD/DVD compatible player, the differences need to be absorbed.

To realize such a compatible player, it is acceptable to use light sources of wavelengths adapted to the CD and DVD, thereby configuring an optical pickup. An optical pickup having such a configuration is already known, for example, as disclosed in the Unexamined Japanese Patent Application Publication No. Hei 10-269608. FIG. 8 shows an example.

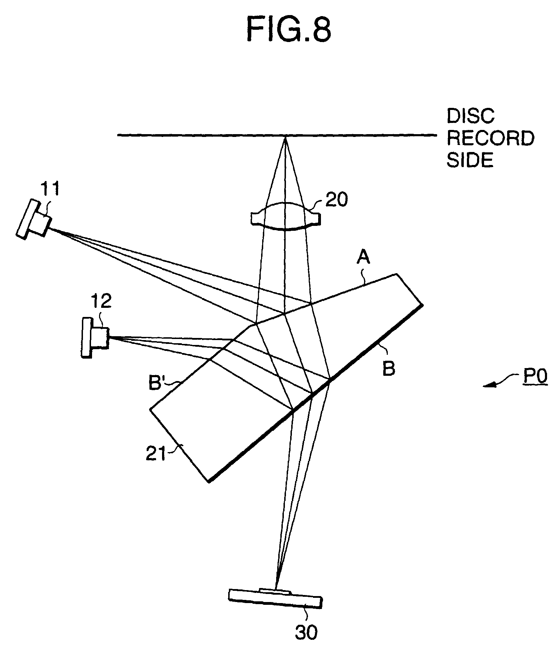

FIG. 8 is a schematic drawing to show a schematic structure of an optical unit of an optical pickup used with a compatible player in the related art. In FIG. 8, an optical pickup P0 comprises a first laser diode 11 for emitting a light beam having a wavelength of 650 nm, for example, adapted to a DVD and a second laser diode 12 for emitting a light beam having a wavelength of 780 nm, for example, adapted to a CD and a CD-R.

On the other hand, along the normal to a disc record side where write and read are to be executed, an object lens 20 of a condensing optical unit and an integral-type prism 21 shaped like a wedge are placed in order from the disc record side. The object lens 20 faces the disc record side, while the surfaces of the integral-type prism 21 on the condensing optical unit side in FIG. B (faces A and B') are inclined to the normal.

The laser diodes 11 and 12 and the integral-type prism 21 are placed so that emission light of the laser diode 11 is incident on the face A of the integral-type prism 21 at a predetermined angle, that the incidence light is reflected on the face A and is guided to the disc record side through the object lens 20, that emission light of the laser diode 12 is incident on the face B' at a predetermined angle, that the incidence light is reflected on face B of the integral-type prism 21, and that the reflected light passing through the face A is guided to the disc record side through the object lens 20.

The light beam condensed through the object lens 20 is reflected on the disc record side while it is undergoing light modulation, and again arrives at the object lens 20 as return light. The return light through the object lens 20 is guided to the integral-type prism 21 on a similar optical path to that of the incidence light on the disc. The reflected light from the disc record side is incident on the face A of the integral-type prism 21 and passes through the face B. The light reflected from the disc and passing through the face B arrives at a light reception element 30.

The integral-type prism 21 allows the light beams selectively emitted from the first laser diode 11 and the second laser diode 12 to be incident on the disc record side along the normal thereto through the object lens 20 substantially with no aberration. The return light through the object lens 20 is incident on the integral-type prism 21. When it passes through the integral-type prism 21, the light is given astigmatism and is guided to the light reception element 30. The shape and optical characteristics of the integral-type prism 21 are determined so that sufficient light reception strength and astigmatism at the light reception element 30 are provided for each of the light beams from the first and second laser diodes 11 and 12; the detailed contents are already disclosed in the Unexamined Japanese Patent Application Publication No. Hei 10-269608.

If the integral-type prism 21 is used, the light beam emitted from the first laser diode 11 is reflected on the face A of the integral-type prism 21 and is guided to the object lens 20 substantially with no aberration. The reflected light from the disc record side passes through the faces A and B of the integral-type prism 21 and is guided to the light reception element 30. When it passes through the face B from the face A of the integral-type prism 21, the light is given any desired astigmatism. The light beam emitted from the second laser diode 12 passes through the face B' of the integral-type prism 21 and is reflected on the face B. The light beam reflected on the face B passes through the face A and is guided to the object lens 20 substantially with no aberration. The reflected light from the disc record side passes through the faces A and B of the integral-type prism 21 and is guided to the light reception element 30 like the light beam emitted from the first laser diode 11. When it passes through the faces A and B of the integral-type prism 21, the light is given any desired astigmatism.

However, when the reflected light from the disc record side passes through the faces A and B of the integral-type prism 21, aberration other than the astigmatism (mainly, coma aberration) is produced. The coma aberration asymmetrically distorts the light amount distribution with the optical axis of the return light on the light reception element 30 as the center.

For example, if the light reception element 30 is made up of four light reception division parts, a focus error using an astigmatism method may be unable to be detected accurately because of the effect of the coma aberration; the player incorporating the optical pickup cannot well execute disc focus servo and cannot accurately read record information on the disc; this is a problem.

It is therefore an object of the invention to provide an optical pickup capable of applying different independent light beams and receiving return light having a good light amount distribution containing astigmatism (a distribution in which the light amounts are symmetrical with respect to the optical axis).

According to the invention as in aspect 1, there is provided an optical pickup comprising beam emission unit for supplying at least two independent light beams, a common optical unit for condensing the light beam from the beam emission unit toward a record medium, an integral-type prism on which each of the light beams from the beam emission unit is incident, for guiding each of the light beams to the condensing optical unit substantially with no aberration, the integral-type prism on which return light from the record medium is incident, for guiding the return light to a light reception element, and aberration removal unit being placed between the light reception element and the integral-type prism for removing coma aberration of the return light.

The aberration removal unit removes coma aberration given by the integral-type prism, etc., to the return light from the record medium. Consequently, the light reception element can receive return light having a good light amount distribution containing astigmatism, and a focus error required for executing good focus servo can be detected accurately.

In the invention as in aspect 2, in the optical pickup as in aspect 1, the aberration removal unit further changes an optical path of the return light.

Consequently, the flexibility of placement of the light reception element is increased and the light reception element can be placed at an appropriate position for slimming the optical pickup.

According to the invention as in aspect 3, there is provided an optical pickup comprising beam emission unit for supplying at least two independent light beams, a common optical unit for condensing the light beam from the beam emission unit toward a record medium, an integral-type prism on which each of the light beams from the beam emission unit is incident, for guiding each of the light beams to the condensing optical unit substantially with no aberration, the integral-type prism on which return light from the record medium is incident, for guiding the return light to a light reception element, and astigmatism giving unit being placed between the light reception element and the integral-type prism for giving astigmatism to the return light.

The astigmatism giving unit gives astigmatism to the return light emitted from the integral-type prism to the light reception element and guides the light to the light reception element. Consequently, the light reception element can receive return light having a good light amount distribution containing astigmatism, and a focus error required for executing good focus servo can be detected accurately.

In the invention as in aspect 4, in the optical pickup as in aspect 3, only the astigmatism giving unit gives astigmatism required for detecting a focus error. Consequently, the light reception element can receive return light having a good light amount distribution containing astigmatism, and a focus error required for executing good focus servo can be detected accurately.

In the invention as in aspect 5, in the optical pickup as in aspect 3, both the astigmatism giving unit and the integral-type prism give astigmatism required for detecting a focus error. Consequently, the light reception element can receive return light having a good light amount distribution containing astigmatism, and a focus error required for executing good focus servo can be detected accurately. Further, the flexibility of design of the optical parts is also increased.

In the invention as in aspect 6, in the optical pickup as in aspect 3, 4, or 5, the astigmatism giving unit further has a lens function.

Consequently, the distance from the astigmatism giving unit to the light reception element can be set arbitrarily, and the light reception element can be placed at an appropriate position for miniaturizing the optical pickup.

According to the invention as in aspect 7, there is provided an optical pickup comprising beam emission unit for supplying at least two independent light beams, a common optical unit for condensing the light beam from the beam emission unit toward a record medium, an integral-type prism on which each of the light beams from the beam emission unit is incident, for guiding each of the light beams to the condensing optical unit substantially with no aberration, the integral-type prism on which return light from the record medium is incident, for guiding the return light to a light reception element, and optical path change unit being placed between the light reception element and the integral-type prism for changing an optical path of the return light.

Consequently, the flexibility of placement of the light reception element is increased and the light reception element can be placed at an appropriate position for slimming the optical pickup.

According to the invention as in aspect 8, there is provided an optical pickup comprising beam emission unit for supplying at least two independent light beams, a common optical unit for condensing the light beam from the beam emission unit toward a record medium, an integral-type prism on which each of the light beams from the beam emission unit is incident, for guiding each of the light beams to the condensing optical unit substantially with no aberration, the integral-type prism on which return light from the record medium is incident, for guiding the return light to a light reception element, and aberration adjustment unit being placed between the light reception element and the integral-type prism for adjusting aberration of the return light.

Consequently, the light reception element can receive return light having a good light amount distribution containing astigmatism or it is made possible to remove coma aberration, so that a focus error required for executing good focus servo can be detected accurately.

In the accompanying drawings:

FIG. 1 is a schematic drawing to show a schematic structure of an optical unit of an optical pickup in a first embodiment of the invention;
FIG. 2 is a schematic drawing to show a schematic structure of an optical unit of an optical pickup in a second embodiment of the invention;
FIGS. 3A and 3B are schematic drawings to show a schematic structure of an optical unit of an optical pickup in a third embodiment of the invention;
FIG. 4 is a drawing to show an optical path applied when return light from an integral-type prism is incident on a right-angle prism from the incidence face thereof slantingly and passes through the right-angle prism;
FIGS. 5A and 5B are schematic drawings to show a schematic structure of an optical unit of an optical pickup in a fourth embodiment of the invention;
FIG. 6 is a schematic drawing to show a schematic structure of an optical unit of an optical pickup in a fifth embodiment of the invention;
FIG. 7 is a schematic drawing to show a schematic structure of an optical unit of an optical pickup in a sixth embodiment of the invention;
FIG. 8 is a schematic drawing to show a schematic structure of an optical unit of an optical pickup used with a compatible player in a related art.

Referring now to the accompanying drawings, there are shown preferred embodiments of the invention.

(First embodiment)

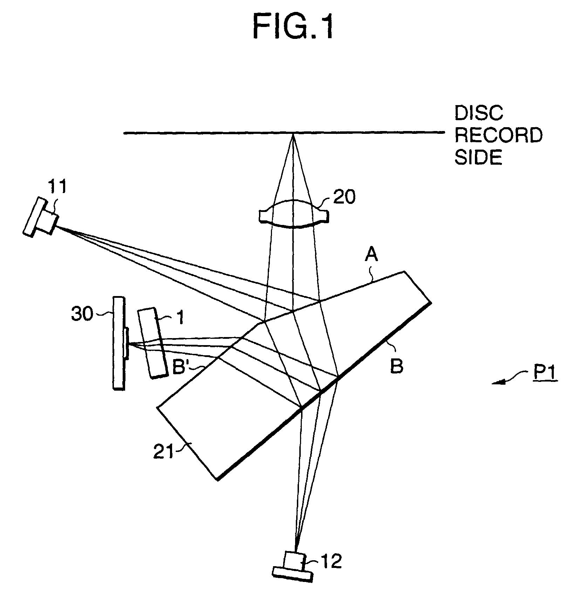

FIG. 1 is a schematic drawing to show a schematic structure of an optical unit of an optical pickup in a first embodiment of the invention; here, an optical pickup P1 using light sources of two different wavelengths is shown. Parts identical with or similar to those of the optical pickup previously described with reference to FIG. 8 are denoted by the same reference numerals in FIG. 1.

In FIG. 1, the optical pickup P1 comprises a first laser diode 11 having a wavelength of 650 nm for recording and playing back a high-recording-density optical disc such as a DVD as beam emission unit, a second laser diode 11 for recording and playing back a low-recording-density optical disc such as a CD or a CD-R as beam emission unit, an object lens 20 as a common condensing optical unit for condensing a light beam from the first or second laser diode toward a record medium such as a CD, an LD, or a DVD, an integral-type prism 21, a hologram 1 as aberration removal unit, and a light reception element 30.

The integral-type prism 21 has at least two input surfaces A and B on which the light beams are made incident corresponding to the beam emission unit and an output surface B' where astigmatism is given to return light produced by condensing each of the light beams on a disc record side through the object lens 20 and the light is emitted. One of the input surfaces, A, is formed on the condensing optical unit side, the other input surface B is formed on an opposite side to the condensing optical unit side, and the output surface B' is formed on the condensing optical unit side, the one input surface A and the other input surface B being not parallel to each other. The one input surface A and the output surface B' form an angle to shape a mountain.

The object lens 20 and the integral-type prism 21 are placed at similar positions to those in FIG. 8 with respect to the disc record side.

Therefore, in FIG. 1, the laser diodes 11 and 12 and the integral-type prism 21 are placed so that emission light of the laser diode 11 is incident on the surface A of the integral-type prism 21 at a predetermined angle, that the incidence light is reflected on the surface A and is guided to the disc record side through the object lens 20, that emission light of the laser diode 12 is incident on the surface B at a predetermined angle, and that the incidence light passes through the surface A of the integral-type prism 21 and is guided to the disc record side through the object lens 20. The emission light from each laser diode is guided to the disc record side substantially with no aberration as in the related art. The shape and optical characteristics of the integral-type prism 21 are determined so that sufficient light reception strength and astigmatism at the light reception element 30 are provided for each of the light beams from the first and second laser diodes 11 and 12; the detailed contents are already disclosed in the Unexamined Japanese Patent Application Publication No. Hei 10-269608.

The light beam condensed through the object lens 20 is reflected on the disc record side while it is undergoing light modulation, and again arrives at the object lens 20 as return light. The return light through the object lens 20 is guided to the integral-type prism 21 on a similar optical path to that of the incidence light on the disc. The reflected light from the disc record side is incident on the surface A of the integral-type prism 21, is reflected on the surface B, and is emitted from the surface B'. When the reflected light from the disc record side passes through the integral-type prism 21, it is given predetermined astigmatism. The reflected light emitted from the surface B' is guided into the hologram 1.

The hologram 1 is disposed on the condensing optical unit side of the integral-type prism 21 and is placed in an optical path between the integral-type prism 21 and the light reception element 30. The hologram 1 removes aberration other than the astigmatism (for example, coma aberration or the like) produced as the light from the disc record side passes through the integral-type prism 21 from the return light from the integral-type prism 21. The return light passing through the hologram 1 arrives at the light reception element 30.

The wave front of the hologram 1 is designed by making light from the integral-type prism 21 direction containing coma aberration and light containing only astigmatism based on which a focus error can be well detected from the light reception element 30 direction interfere with each other.

The light beam emitted from the first laser diode 11 is condensed on the disc record side through an optical path of the laser diode 11 to the surface A to the object lens 20 and the reflected light on the disc record side is guided as return light to the light reception element 30 through an optical path of the object lens 20 to the surface A to the surface B to the surface B' to the hologram 1.

The light beam emitted from the second laser diode 12 is condensed on the disc record side through an optical path of the laser diode 12 to the surface B to the surface A to the object lens 20 and the reflected light on the disc record side is guided as return light to the light reception element 30 through an optical path of the object lens 20 to the surface A to the surface B to the surface B' to the hologram 1.

In this case, when the return light from the disc record side passes through the integral-type prism 21, it is given astigmatism, produces aberration other than the astigmatism, such as coma aberration, and is guided to the hologram 1. Since the hologram 1 removes aberration other than the astigmatism from the return light and guides the return light to the light reception element 30, the light received by the light reception element 30 does not contain distortion caused by the aberration other than the astigmatism. Therefore, the light reception element 30 can receive return light having a good light amount distribution containing astigmatism and not containing aberration other than the astigmatism. Consequently, a focus error required for executing good focus servo can be detected accurately.

The beam emission unit of the first and second laser diodes 11 and 12 need not necessarily be placed on both sides of the integral-type prism (namely, the condensing optical unit side and the side opposite thereto) and may be placed on one side. Such an example will be discussed as a second embodiment of the invention just below:

(Second embodiment)

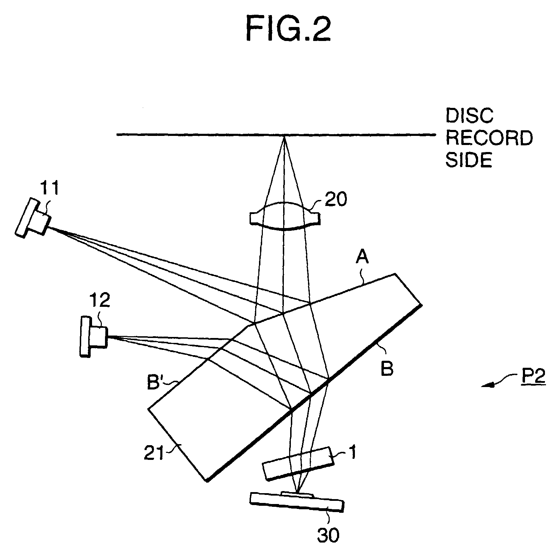

FIG. 2 is a schematic drawing to show a schematic structure of an optical unit of an optical pickup in a second embodiment of the invention; here, an optical pickup P2 comprising both light sources of two different wavelengths placed on the condensing optical unit side of an integral-type prism 21 is shown. Parts identical with or similar to those of the optical pickup P1 previously described with reference to FIG. 1 are denoted by the same reference numerals in FIG. 2.

In the optical pickup P2 in FIG. 2, the integral-type prism 21 has at least two input surfaces A and B' on which the light beams are made incident corresponding to the beam emission unit and an output surface B where astigmatism is given to return light produced by condensing each of the light beams on a record side of a record medium through an object lens 20 and the light is emitted. One of the input surfaces, A, and the other input surface B' are formed on the condensing optical unit side and the output surface B is formed on an opposite side to the condensing optical unit side, the one input surface A and the output surface B being not parallel to each other. The one input surface A and the other input surface B' form an angle to shape a mountain.

The object lens 20 and the integral-type prism 21 are placed at similar positions to those in FIG. 8 with respect to the disc record side.

In FIG. 2, laser diodes 11 and 12 and the integral-type prism 21 are placed so that emission light of the laser diode 11 is incident on the surface A of the integral-type prism 21 at a predetermined angle, that the incidence light is reflected on the surface A and is guided to the disc record side through the object lens 20, that emission light of the laser diode 12 is incident on the surface B' at a predetermined angle, and that the incidence light is reflected on the surface B of the integral-type prism 21, passes through the surface A, and is guided to the disc record side through the object lens 20. The emission light from each laser diode is guided to the disc record side substantially with no aberration as in the related art.

The light beam condensed through the object lens 20 is reflected on the disc record side while it is undergoing light modulation, and again arrives at the object lens 20 as return light. The return light through the object lens 20 is guided to the integral-type prism 21 on a similar optical path to that of the incidence light on the disc. The reflected light from the disc record side is incident on the surface A of the integral-type prism 21 and is emitted from the surface B. When the reflected light from the disc record side passes through the integral-type prism 21, it is given predetermined astigmatism. The reflected light emitted from the surface B is guided into a hologram 1.

The hologram 1 is disposed on the opposite side to the condensing optical unit side of the integral-type prism 21 and is placed in an optical path between the integral-type prism 21 and a light reception element 30. The hologram 1 removes aberration other than the astigmatism (for example, coma aberration or the like) produced as the light from the disc record side passes through the integral-type prism 21. The return light passing through the hologram 1 arrives at the light reception element 30. The hologram 1 has a wave front and a function similar to those previously described in the first embodiment.

The light beam emitted from the first laser diode 11 is condensed on the disc record side through an optical path of the laser diode 11 to the surface A to the object lens 20 and the reflected light on the disc record side is guided as return light to the light reception element 30 through an optical path of the object lens 20 to the surface A to the surface B to the hologram 1.

The light beam emitted from the second laser diode 12 is condensed on the disc record side through an optical path of the laser diode 12 to the surface B' to the surface B to the surface A to the object lens 20 and the reflected light on the disc record side is guided as return light to the light reception element 30 through an optical path of the object lens 20 to the surface A to the surface B to the hologram 1.

In this case, when the return light from the disc record side passes through the integral-type prism 21, it produces aberration other than the astigmatism, such as coma aberration, and is guided to the hologram 1. Since the hologram 1 removes aberration other than the astigmatism from the return light and guides the return light to the light reception element 30, the light received by the light reception element 30 does not contain distortion caused by the aberration other than the astigmatism.

Therefore, the light reception element 30 can receive return light having a good light amount distribution containing astigmatism and not containing aberration other than the astigmatism. Consequently, a focus error required for executing good focus servo can be detected accurately.

In the first and second embodiments described above, the hologram 1 is used as the aberration removal unit, but the aberration removal unit in the invention is not limited to the hologram and an optical prism may be used. Such examples will be discussed as third and fourth embodiments of the invention below:

(Third embodiment)

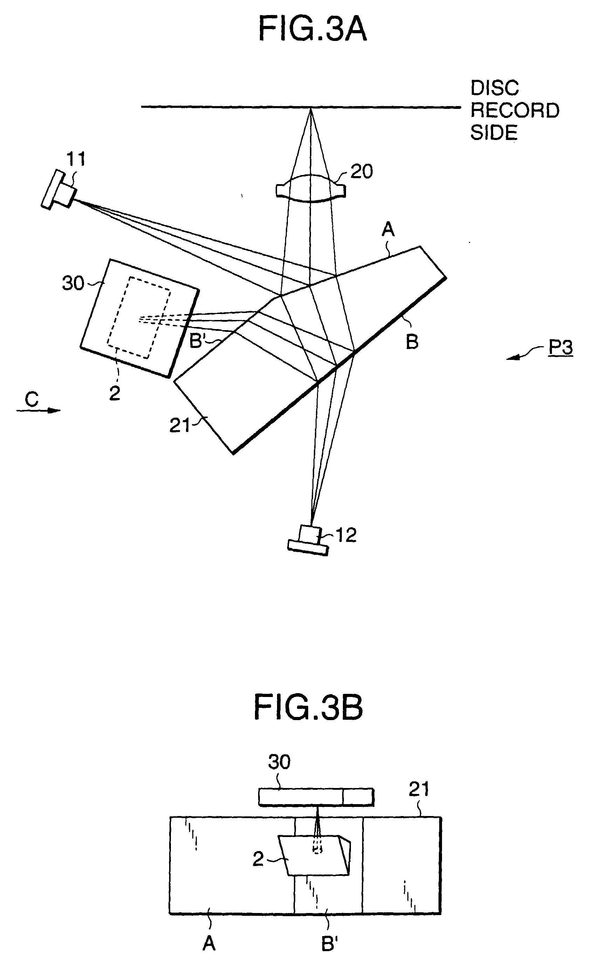

FIGS. 3A and 3B are schematic drawings to show a schematic structure of an optical unit of an optical pickup in a third embodiment of the invention; here, an optical pickup P3 using light sources of two different wavelengths is shown. FIG. 3A is a drawing to show the placement relationship among main optical parts of the optical pickup P3 together with light paths, and FIG. 3B is a view of the optical pickup P3 from the direction of arrow C shown in FIG. 3A.

The optical pickup P3 comprises a right-angle prism 2 as aberration removal unit in place of the hologram 1 of the optical pickup P1 previously described with reference to FIG. 1. Parts identical with or similar to those of the optical pickup P1 previously described with reference to FIG. 1 are denoted by the same reference numerals in FIGS. 3A and 3B.

The right-angle prism 2 is disposed on the condensing optical unit side of an integral-type prism 21 and is placed in an optical path between the integral-type prism 21 and a light reception element 30 so that it has an incidence face tilted (namely, not vertical) to the travel direction of light from the integral-type prism 21.

The right-angle prism 2 has a light incidence face and a light emission face of two planes at right angles and a mirror as optical path change unit is formed on a slope between the incidence face and the emission face (slope inclined 45 degrees to the incidence face and the emission face.

In FIG. 3A, the light beam emitted from a first laser diode 11 is condensed on the disc record side through an optical path of the laser diode 11 to a surface A to an object lens 20 and the reflected light on the disc record side is guided as return light to the incidence face of the right-angle prism 2 through an optical path similar to that of the return light of the laser diode 11 in the optical pickup P1 previously described with reference to FIG. 1, namely, an optical path of the object lens 20 to the surface A to a surface B to a surface B'.

The light beam emitted from a second laser diode 12 is condensed on the disc record side through an optical path of the laser diode 12 to the surface B to the surface A to the object lens 20 and the reflected light on the disc record side is guided as return light to the incidence face of the right-angle prism 2 through an optical path similar to that of the return light of the laser diode 12 in the optical pickup P1 previously described with reference to FIG. 1, namely, an optical path of the object lens 20 to the surface A to the surface B to the surface B'.

As described above, the right-angle prism 2 allows the return light from the integral-type prism 21 to be incident on the right-angle prism 2 slantingly from the incidence face, then changes the optical path of the light by means of the mirror and then emits the light from the emission face and guides the light to the light reception element 30.

In this case, the light returned from the integral-type prism 21 and incident on the right-angle prism 2 from the incidence face thereof contains astigmatism given by the integral-type prism 21 and aberration other than the astigmatism, such as coma aberration. Since the right-angle prism 2 removes the coma aberration of the return light and guides the return light to the light reception element 30, the light received by the light reception element 30 does not contain distortion caused by the coma aberration.

The coma aberration has a directional property. Thus, if the right-angle prism 2 gives coma aberration of the same magnitude as and an opposite polarity to the coma aberration produced in the integral-type prism 21, the coma aberration produced in the integral-type prism 21 and the coma aberration given by the right-angle prism 2 cancel each other out, and the light received by the light reception element 30 little contains coma aberration. Since the coma aberration produced in the integral-type prism is found at the design stage, the optical characteristics of the right-angle prism 2 can also be determined so as to produce coma aberration of the same magnitude as and an opposite polarity to the coma aberration produced in the integral-type prism 21.

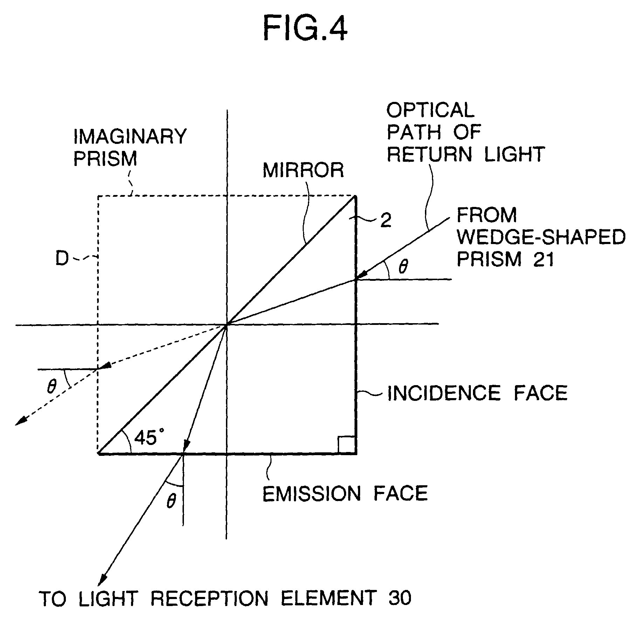

The right-angle prism 2 is placed in the optical path between the integral-type prism 21 and the light reception element 30 so that it has the incidence face tilted (namely, not vertical) to the travel direction of light from the integral-type prism 21, whereby it is assigned a role as astigmatism giving unit for giving astigmatism. This topic will be discussed with reference to FIG. 4.

FIG. 4 is a drawing to show an optical path applied when the return light from the integral-type prism 21 is incident on the right-angle prism 2 from the incidence face thereof slantingly and passes through the right-angle prism 2. In FIG. 4, considering the case where the return light from the integral-type prism 21 is incident on the right-angle prism 2 from the incidence face thereof slantingly (at incidence angle $\theta$), the return light is refracted on the incidence face and is incidence on the right-angle prism 2, then is once reflected on the mirror and the optical path of the light is changed, then the light is again refracted on the emission face, then is emitted slantingly (at emission angle $\theta$) from the emission face (as indicated by the solid line arrow in FIG. 4). Consequently, the return light from the integral-type prism 21 passes through the right-angle prism 2, so that the optical path is changed by $((\pi/2) - 2\theta)$.

In FIG. 4, considering a state in which an imaginary prism with the mirror as a symmetrical face (as indicated by the dotted line arrow in FIG. 4) is put on the right-angle prism 2 and the mirror is removed, the right-angle prism 2 and the imaginary prism form a parallel flat plate with the incidence face of the right-angle prism 2 and a face D of the imaginary prism being parallel with each other. If the return light from the integral-type prism 21 is incident on the prism forming a part of the parallel flat plate from the incidence face of the prism slantingly (at incidence angle $\theta$), it is given astigmatism by the parallel flat plate and is emitted at emission angle $\theta$ from the face D.

As seen in FIG. 4, the optical path of the emission light is an optical path symmetrical with the above-described optical path applied for emitting light from the emission face of the right-angle prism 2 to the light reception element 30 with respect to the mirror face. In other words, the light emitted from the emission face of the right-angle prism 2 to the light reception element 30 can be assumed to be light provided by changing the optical path of the above-described light emitted from the face D of the imaginary prism by means of the mirror. Therefore, it is understood that the light emitted from the emission face of the right-angle prism 2 to the light reception element 30 is given astigmatism by the integral-type prism 21.

Thus, when the return light from the integral-type prism 21 is incident on the right-angle prism 2 from the incidence face thereof slantingly, the optical path of the incidence light is changed by the integral-type prism 21 and coma aberration is guided by the integral-type prism 21 from the removal emission face to the light reception element 30.

Therefore, the light reception element 30 can receive return light having a good light amount distribution containing a sufficient amount of astigmatism to accurately detect a focus error and not containing coma aberration. Consequently, a focus error required for executing good focus servo can be detected accurately.

In the embodiment, the right-angle prism 2 also functions as optical path change unit in the optical path between the integral-type prism 21 and the light reception element 30. That is, since the optical path of the return light from the integral-type prism 21 is changed for guiding the light to the light reception face of the light reception element 30, the light reception element 30 of the optical pickup P3 need not necessarily be placed on the same plane as the display face in FIG. 3A, and the flexibility of placement of the light reception element 30 is increased when the optical unit is designed. Consequently, the light reception element 30 can be placed at an appropriate position for slimming the optical pickup, and the optical pickup can be miniaturized and slimmed.

The beam emission unit of the first and second laser diodes 11 and 12 need not necessarily be placed on both sides of the integral-type prism (namely, the condensing optical unit side and the side opposite thereto) and may be placed on one side. Such an example will be discussed as a fourth embodiment of the invention just below:

(Fourth embodiment)

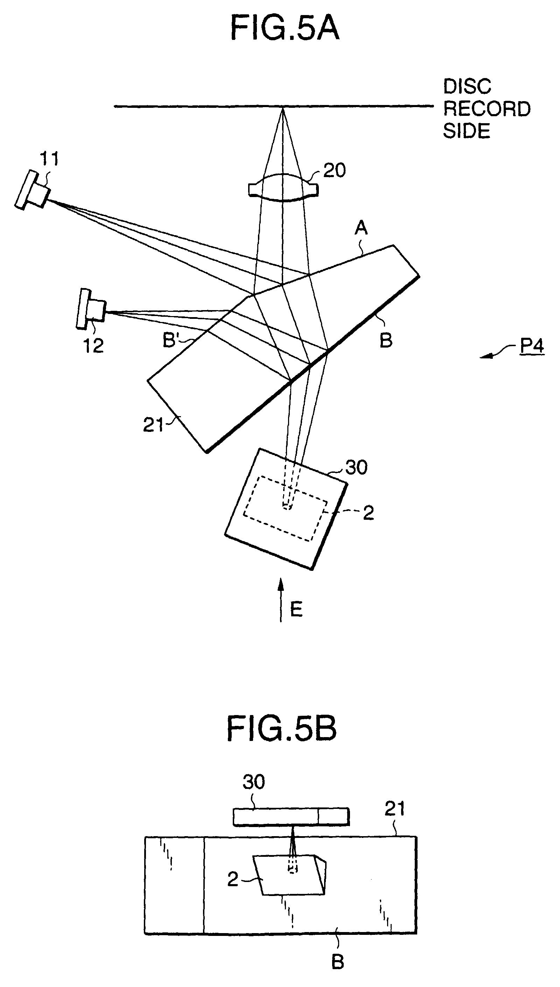

FIG. 5 is a schematic drawing to show a schematic structure of an optical unit of an optical pickup in a fourth embodiment of the invention; here, an optical pickup P4 comprising both light sources of two different wavelengths placed on the condensing optical unit side of an integral-type prism 21 is shown. FIG. 5A is a drawing to show the placement relationship among main optical parts of the optical pickup P4 together with light paths, and FIG. 5B is a view of the optical pickup P4 from the direction of arrow E shown in FIG. 5A. Parts identical with or similar to those of the optical pickup P3 previously described with reference to FIG. 3 are denoted by the same reference numerals in FIG. 5.

In FIG. 5, the optical pickup P4 uses optical parts equivalent to those of the optical pickup P3 and the optical pickups P4 and P3 differ in optical placement of the optical parts.

That is, in the optical pickup P4, a second laser diode 12, like a first laser diode 11, is disposed on the condensing optical unit side of the integral-type prism 21. The optical parts of the optical pickup P4 other than the first laser diode 11 are disposed like those of the optical pickup P3.

That is, the light beam emitted from the first laser diode 11 is condensed on the disc record side through an optical path of the laser diode 11 to a surface A to an object lens 20 and the reflected light on the disc record side is guided as return light to a light reception element 30 through an optical path of the object lens 20 to the surface A to a surface B to a right-angle prism 2.

The light beam emitted from the second laser diode 12 is condensed on the disc record side through an optical path of the laser diode 12 to a surface B' the surface B to the surface A to the object lens 20 and the reflected light on the disc record side is guided as return light to the light reception element 30 through an optical path of the object lens 20 to the surface A to the surface B to the right-angle prism 2.

Thus, the return light received by the light reception element 30 does not contain coma aberration as in the optical pickup P3, and coma aberration is given by the integral-type prism 21.

Therefore, the light reception element 30 can receive return light having a good light amount distribution containing a sufficient amount of astigmatism to accurately detect a focus error and not containing coma aberration. Consequently, a focus error required for executing good focus servo can be detected accurately.

In the third and fourth embodiments described above, the aberration removal unit has been described as the right-angle prism 2 having the light incidence face and the light emission face of two planes at right angles with the mirror as optical path change unit being formed on the slope inclined 45 degrees to the incidence face and the emission face. However, if the aberration removal unit is shaped at least so as to remove aberration other than astigmatism, the angle at which the incidence face and the emission face of the prism cross each other need not necessarily be the right angle, and the mirror face need not necessarily be inclined 45 degrees to the incidence face and the emission face either.

In the first to fourth embodiments described above, each optical pickup comprises the aberration removal unit of the hologram 1 or the right-angle prism 2 in the optical path between the integral-type prism 21 and the light reception unit 30, but the invention is not limited to the configurations. That is, aberration giving unit may be provided in the optical path between the integral-type prism 21 and the light reception unit 30 in place of the aberration removal unit. Such examples will be discussed as fifth and sixth embodiments of the invention below:

(Fifth embodiment)

In a fifth embodiment of the invention, astigmatism giving unit for giving astigmatism is provided in place of the aberration removal unit.

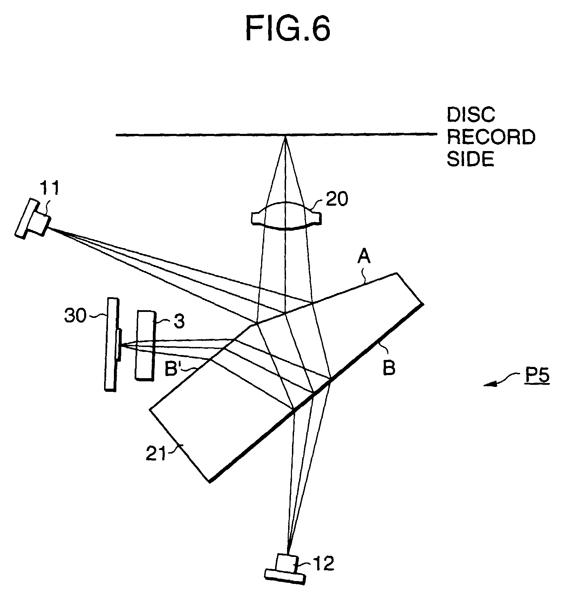

FIG. 6 is a schematic drawing to show a schematic structure of an optical unit of an optical pickup in a fifth embodiment of the invention; here, an optical pickup P5 using light sources of two different wavelengths is shown. The optical pickup P5 comprises a toric lens 3 as astigmatism giving unit in place of the hologram 1 as the aberration removal unit in the optical pickup P1 previously described with reference to FIG. 1. Parts identical with or similar to those of the optical pickup P1 previously described with reference to FIG. 1 are denoted by the same reference numerals in FIG. 6.

The toric lens 3 is disposed on the condensing optical unit side of an integral-type prism 21 and is placed in an optical path between the integral-type prism 21 and a light reception element 30.

In FIG. 6, the light beam emitted from a first laser diode 11 is condensed on the disc record side through an optical path of the laser diode 11 to a surface A to an object lens 20 and the reflected light on the disc record side is guided as return light to the toric lens 3 through an optical path similar to that of the return light of the laser diode 11 in the optical pickup P1 previously described with reference to FIG. 1, namely, an optical path of the object lens 20 to the surface A to a surface B to a surface B'.

The light beam emitted from a second laser diode 12 is condensed on the disc record side through an optical path of the laser diode 12 to the surface B to the surface A to the object lens 20 and the reflected light on the disc record side is guided as return light to the toric lens 3 through an optical path similar to that of the return light of the laser diode 12 in the optical pickup P1 previously described with reference to FIG. 1, namely, an optical path of the object lens 20 to the surface A to the surface B to the surface B'.

The toric lens 3 produces new astigmatism for the return light from the integral-type prism 21, then guides the return light given the new astigmatism to the light reception element 30.

Therefore, the return light received by the light reception element 30 contains the new astigmatism given by the toric lens 3 in addition to astigmatism given by the integral-type prism 21 as previously described in the optical pickup P1, so that a sufficient amount of astigmatism is given, making a good light amount distribution. As a result, the light reception element 30 can receive return light having a good light amount distribution containing a sufficient amount of astigmatism. Consequently, a focus error required for executing good focus servo can be detected accurately.

In the embodiment, the astigmatism giving unit is provided by placing the toric lens 3 in the optical path between the integral-type prism 21 and the light reception element 30. Thus, the lens function of the toric lens 3 enables the light reception element 30 to be placed at a position where the distance from the integral-type prism 21 to the light reception element 30 is set arbitrarily; the optical pickup can be miniaturized and slimmed.

The beam emission unit of the first and second laser diodes 11 and 12 need not necessarily be placed on both sides of the integral-type prism (namely, the condensing optical unit side and the side opposite thereto) and may be placed on one side. Such an example will be discussed as a sixth embodiment of the invention just below:

(Sixth embodiment)

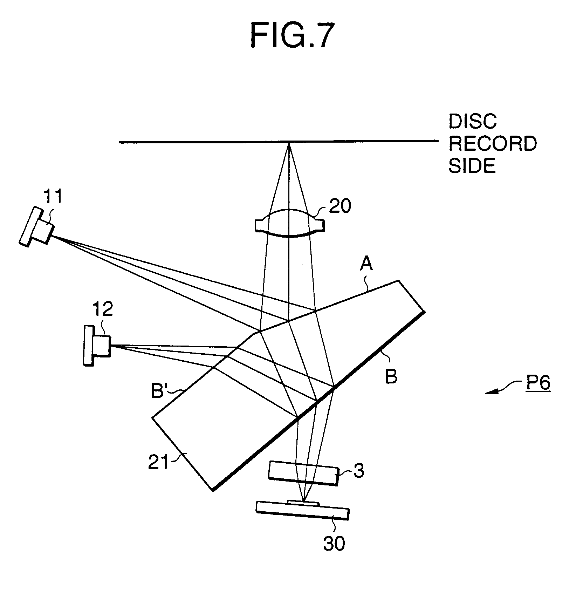

FIG. 7 is a schematic drawing to show a schematic structure of an optical unit of an optical pickup in a sixth embodiment of the invention; here, an optical pickup P6 comprising both light sources of two different wavelengths placed on the condensing optical unit side of an integral-type prism 21 is shown. Parts identical with or similar to those of the optical pickup P5 previously described with reference to FIG. 6 are denoted by the same reference numerals in FIG. 7.

In FIG. 7, the optical pickup P6 uses optical parts equivalent to those of the optical pickup P5 and the optical pickups P6 and P5 differ in optical placement of the optical parts.

That is, in the optical pickup P6, a second laser diode 12, like a first laser diode 11, is disposed on the condensing optical unit side of the integral-type prism 21. The optical parts of the optical pickup P6 other than the first laser diode 11 are disposed like those of the optical pickup P1.

That is, the light beam emitted from the first laser diode 11 is condensed on the disc record side through an optical path of the laser diode 11 to a surface A to an object lens 20 and the reflected light on the disc record side is guided as return light to a light reception element 30 through an optical path of the object lens 20 to the surface A to a surface B to a toric lens 3.

The light beam emitted from the second laser diode 12 is condensed on the disc record side through an optical path of the laser diode 12 to a surface B' the surface B to the surface A to the object lens 20 and the reflected light on the disc record side is guided as return light to the light reception element 30 through an optical path of the object lens 20 to the surface A to the surface B to the toric lens 3.

The toric lens 3 produces new astigmatism for the return light from the integral-type prism 21, then guides the return light given the new astigmatism to the light reception element 30.

Therefore, the return light received by the light reception element 30 contains the new astigmatism given by the toric lens 3 in addition to astigmatism given by the integral-type prism 21 as previously described in the optical pickup P5, so that a sufficient amount of astigmatism is given, making a good light amount distribution. Ass result, the light reception element 30 can receive return light having a good light amount distribution containing a sufficient amount of astigmatism. Consequently, a focus error required for executing good focus servo can be detected accurately.

In the embodiment like the fifth embodiment, the astigmatism giving unit is provided by placing the toric lens 3 in the optical path between the integral-type prism 21 and the light reception element 30. Thus, the lens function of the toric lens 3 enables the light reception element 30 to be placed at a position where the distance from the integral-type prism 21 to the light reception element 30 is set arbitrarily; the optical pickup can be miniaturized and slimmed.

According to the invention, aberration removal unit is placed between the light reception element and the integral-type prism for removing aberration other than astigmatism given by the integral-type prism, etc., to the return light from the record medium. Consequently, the light reception element can receive return light having a good light amount distribution containing astigmatism, and a focus error required for executing good focus servo can be detected accurately.

Astigmatism giving unit is placed between the light reception element and the integral-type prism for giving astigmatism to the return light emitted from the integral-type prism to the light reception element and guiding the light to the light reception element. Consequently, the light reception element can receive return light having a good light amount distribution containing astigmatism, and a focus error required for executing good focus servo can be detected accurately.

Aberration adjustment unit is placed between the light reception element and the integral-type prism for adjusting aberration of the return light emitted from the integral-type prism to the light reception element and guiding the light to the light reception element. Consequently, the light reception element can receive return light having a good light amount distribution containing astigmatism, and a focus error required for executing good focus servo can be detected accurately.

**Claims**

1. An optical pickup comprising:

   beam emission unit for supplying at least two independent light beams;
   a common optical unit for condensing the light beam from said beam emission unit toward a record medium;
   an integral-type prism on which each of the light beams from said beam emission unit is incident, for guiding each of the light beams to said condensing optical unit substantially with no aberration, said integral-type prism on which return light from the record medium is incident, for guiding the return light to a light reception element; and
   aberration removal unit being placed between the light reception element and said integral-type prism for removing coma aberration of the return light.

2. The optical pickup as claimed in claim 1, wherein

   said aberration removal unit further changes an optical path of the return light.

3. An optical pickup comprising:

   beam emission unit for supplying at least two independent light beams;
   a common optical unit for condensing the light beam from said beam emission unit toward a record medium;
   an integral-type prism on which each of the light beams from said beam emission unit is incident, for guiding each of the light beams to said condensing optical unit substantially with no aberration, said integral-type prism on which return light from the record medium is incident, for guiding the return light to a light reception element; and
   astigmatism giving unit being placed between the light reception element and said integral-type prism for giving astigmatism to the return light.

4. The optical pickup as claimed in claim 3, wherein

   only said astigmatism giving unit gives astigmatism required for detecting a focus error.

5. The optical pickup as claimed in claim 3, wherein

   both said astigmatism giving unit and said integral-type prism give astigmatism required for detecting a focus error.

6. The optical pickup as claimed in claim 3, wherein

   said astigmatism giving unit further has a lens function.

7. An optical pickup comprising:

   beam emission unit for supplying at least two independent light beams;
   a common optical unit for condensing the light beam from said beam emission unit toward a record medium;
   an integral-type prism on which each of the light beams from said beam emission unit is incident, for guiding each of the light beams to said condensing optical unit substantially with no aberration, said integral-type prism on which return light from the record medium is incident, for guiding the return light to a light reception element; and
   optical path change unit being placed between the light reception element and said integral-type prism for changing an optical path of the return light.

8. An optical pickup comprising:

   beam emission unit for supplying at least two independent light beams;
   a common optical unit for condensing the light beam from said beam emission unit toward a record medium;
   an integral-type prism on which each of the light beams from said beam emission unit is incident, for guiding each of the light beams to said condensing optical unit substantially with no aberration, said integral-type prism on which return light from the record medium is incident, for guiding the return light to a light reception element; and
   aberration adjustment unit being placed between the light reception element and said integral-type prism for adjusting aberration of the return light.

# FIG.1

DISC
RECORD
SIDE

# FIG.2

DISC
RECORD
SIDE

11

12

20

A

B

B'

21

P2

1

30

# FIG.3A

DISC
RECORD
SIDE

11

20

30

A

B'

B

2

C

21

12

P3

# FIG.3B

30

21

2

A

B'

# FIG.4

IMAGINARY PRISM

MIRROR

OPTICAL PATH OF RETURN LIGHT

2

FROM WEDGE-SHAPED PRISM 21

θ

D

θ

INCIDENCE FACE

45°

θ

EMISSION FACE

TO LIGHT RECEPTION ELEMENT 30

# FIG.5A

DISC
RECORD
SIDE

11

20

12

A

B'

B

21

P4

30

2

E

# FIG.5B

30

21

2

B

# FIG.6

DISC
RECORD
SIDE

11

20

A

30

3

B'

B

21

P5

12

# FIG.7

# FIG.8